# EUROPEAN PATENT APPLICATION

(11) **EP 3 203 348 A1**
(43) Date of publication of application: **09.08.2017**
(21) Application number: 16153765.9
(22) Date of filing: 02.02.2016
(51) Int. Cl.: G05D 7/06, F16K 47/16, F24D 19/10

(54) **VALVE, IN PARTICULAR HEAT EXCHANGER VALVE**

(71) Applicant: Danfoss A/S, 6430 Nordborg (DK)
(72) Inventor: Sigurdsson, Haraldur, 8240 Risskov (DK); Hølck, Poul, 8300 Odder (DK)
(74) Representative: Knoblauch, Andreas

(57) **Abstract**

A valve (1), in particular heat exchanger valve, is described comprising a housing having a first port, a second port and a flow path between said first port and said second port, wherein a valve seat (5), a main valve element (6), and a dynamic unit (9) are arranged in said flow path.

Such a valve should perform pressure control with low noise.

To this end said dynamic unit (9) comprises at least a first valve element (10) and a second valve element (11), wherein said first valve element (10) is part of a first bleed and said second valve element (11) is part of a second bleed, and said first bleed and said second bleed are arranged in series.

## Description

The present invention relates to a valve, in particular a heat exchanger valve, comprising a housing having a first port, a second port, and a flow path between said first port and said second port, a valve seat, wherein a main valve element and a dynamic unit are arranged in said flow path.

The invention is illustrated in the following with help of a radiator valve which is an example for a valve and more specifically an example for a heat exchanger valve. However, the invention is not limited to a heat exchanger valve.

The dynamic unit secures a maximum flow over the valve regardless of the inlet pressure. The dynamic unit forms a kind of flow limiter securing an inlet pressure independent maximum flow. The inlet pressure is trying to close the dynamic unit against a spring, and the pressure working between the dynamic unit and the main valve formed by the valve seat and the valve element is trying to open the dynamic unit. "Closing" and "opening" of the dynamic unit means that the throttling resistance of the dynamic unit is increased or decreased.

The dynamic unit forms a kind of variable throttle means. Each throttle means bears the risk of producing noise.

The object underlying the invention is to provide a dynamic unit producing low noise.

This object is solved with a valve as described at the outset in that said dynamic unit comprises at least a first valve element and a second valve element, wherein said first valve element is part of a first bleed and said second valve element is part of a second bleed, and said first bleed and said second bleed are arranged in series.

In such a construction the total flow resistance produced by the dynamic unit is determined by the sum of the flow resistances of the two (or more) bleeds. This makes it possible to reduce the flow resistance of each bleed, i.e. to allow for a larger through flow area. The larger this area is, the lower is the noise. This is true even in a situation in which the dynamic unit shows the largest pressure drop possible. Even in this case the flow area of each bleed can be made larger as in the same case using only one single bleed, since the connection of the two (or more) bleeds in series form the throttle means.

Preferably at least over a part of a movement path said first valve element and said second valve element are moveable relative to each other. It is possible to use the two or more valve elements of the dynamic unit to make a stepwise control. For example, it is possible to use both valve elements in a first step, for example within a predetermined pressure range, and to use only one of the two valve elements in a second step when the pressure drop exceeds already a predetermined level and a final control is desired.

Preferably both valve elements have different strokes. In this case the first step of the control is performed using both valve elements. However, when one valve element reaches the end of its movement path, the pressure control is achieved only by means of the other valve element. The other valve element can then be used for a more precise control of the pressure drop.

Preferably at least one of said first valve element and said valve element is in form of a cone section. A cone section has a slanted circumferential surface in relation to an axis of movement of the valve element.

In this case it is preferred that at least one of said first valve element and said second valve element cooperates with an inner conical surface of a counter element. A ring-like gap forms between the first valve element and/or the second valve element and the inner conical surface. The radial width of this ring-like gap is one characteristic to determine the flow resistance of the dynamic unit. Both valve elements can cooperate with separate counter elements. However, it is preferred that both valve elements cooperate with the same counter element. In this case the inner conical surface of the counter element extends over a length greater than the axial length of the first valve element and the second valve element so that the complete path of movement of the first valve element and the second valve element can be covered.

Preferably at least one of said first valve element and said second valve element comprises a valve element corrugation on a circumferential surface and/or said inner conical surface comprises a counter element corrugation. A corrugation on at least one of the surfaces means that the respective surface is not smooth but forces a change of direction of the fluid flowing along the surface. A change of direction of flow causes turbulences and this increases the flow resistance without having the need to make the gap too small. The term "corrugation" covers also a very rough surface which is sufficiently uneven to cause a change of direction of the fluid flow and to cause turbulences.

Preferably at least one of said valve element corrugation and said counter element corrugation is stepped. This has two advantages. The production of a stepped corrugation is simple and the turbulences caused by the stepped corrugation are sufficient to produce the desired flow resistance.

Preferably said valve seat comprises a center axis and a first cone angle of said cone section relative to said center axis differs from a second cone angle of said conical surface relative to said center axis. The cone section of the first valve element and/or the second valve element on the one hand has another inclination than the conical surface on the other hand.

Here it is preferred that said first cone angle is larger than said second cone angle. The movement of the first valve element and the second valve element in a direction towards said valve seat not only linearly decreases the width of the ring gap between the respective valve element and the conical surface, but the decrease can be different from linear.

Preferably said counter element comprises a first thread in engagement with a second thread in said housing. When the counter element is rotated in the housing, the axial position of the counter element and therefore the width of the ring-like gap and correspondingly the flow resistance curve of the dynamic unit can be changed.

Preferably a first spring is arranged between said first valve element and said second valve element and a second spring is arranged between said second valve element and a stop in said housing. As long as both valve elements do not come to rest against a stop, the position of the valve element relative to each other is automatically adjusted so that there is an equilibrium between the forces generated by the two springs.

In a preferred embodiment said first valve element comprises a first stem guided in said housing, wherein said second valve element is guided on said first stem. Guiding of the first element in the housing guarantees that the ring-like gap between the first valve element and the counter element can be kept uniform in circumferential direction. On the other hand, the same stem can be used for holding the second valve element in radial position.

Preferably said first valve element comprises a second stem opposite said first stem, wherein said second stem is guided in said housing. This means that the first valve element is guided at two positions having a certain distance relative to each other so that the alignment of the first valve element in the housing and to the counter element can be kept with a rather high precision.

Preferably said first valve element is provided with a stop. The stop defines the maximum stroke of the first valve element. Such a stop can be connected to said second stem or be located at any other suitable position.

A preferred embodiment of the invention will now be described in more detail with reference to the drawing, wherein:
- Fig. 1: shows a sectional view of a valve, and
- Fig. 2: shows an enlarged view of detail II of Fig. 1.

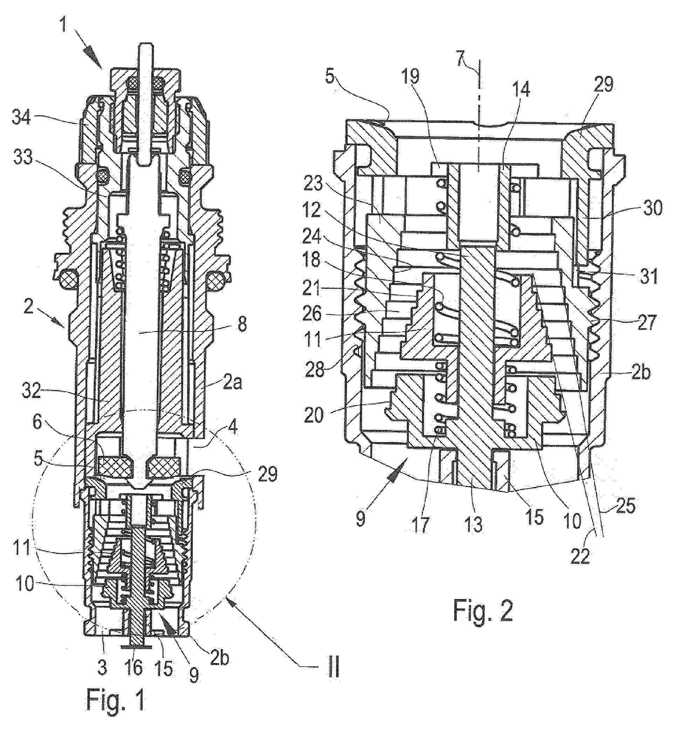

Fig. 1 shows a valve 1, which is in the present embodiment a heat exchanger valve. Valve 1 comprises a housing 2 having an upper part 2a and a lower part 2b. Valve 1 has a first port 3 and a second port 4. First port 3 serves as inlet and second port 4 serves as outlet. A flow path is established between the first port 3 and the second port 4.

A valve seat 5 is arranged in the flow path. A valve element 6 cooperates with the valve seat 5. Valve seat 5 has a central axis 7. Valve element 6 is moveable along this central axis 7and is connected to a valve stem 8 as it is known in the art.

Upstream of the valve seat 5 a dynamic unit 9 is arranged in the flow path between the first port 3 and the second port 4.

The dynamic unit comprises a first valve element 10 and a second valve element 11.

The first valve element 10 comprises a first stem 12 and a second stem 13. First stem 12 is guided in a guide part 14 connected to the housing 2, more precisely the lower housing part 2b or being part of this housing part 2b. The second stem 13 is as well guided in a guide 15 being part of housing 2 or being connected to housing 2. A stop 16 is connected to the second stem 13 and comes to rest against guide 15 when the first valve element 10 has performed a maximum stroke. Such a stop 16 can be located at another position as well.

The second valve element 11 is guided on the first stem 12. The first valve element 10 and the second valve element 11 are moveable relative to each other. In the present embodiment this means that the second valve element 11 is still moveable even if the stop 16 of the first valve element 10 has come to rest against the lower guide 15.

A first spring 17 is arranged between said first valve element 10 and the second valve element 11 and a second spring 18 is arranged between said second valve element 11 and a stop 19 surrounding guide 14. The stop 19 is as well part of valve seat member 29 or at least connected to valve seat member 29. Valve seat member 29 forms the connection between guide 14 and housing part 2b.

The first valve element 10 is in form of a cone section. First valve element 10 has a corrugated circumferential surface 20. In the present case the corrugation of the circumferential surface 20 is a stepwise corrugation. However, it is possible to use a wave-like corrugation as well.

The second valve element 11 is in form of cone section as well. The second valve element 11 has a corrugated circumferential surface 21 which is in similar way a stepwise corrugation. It is, however, possible to use a wave-like corrugation as well. Both circumferential surfaces 20, 21 have the same inclination 22 with respect to the center axis 7 of the valve seat 5. The inclination 22 encloses a first cone angle with the center axis 7.

The first valve element 10 and the second valve element 11 cooperate with a counter element 23. Counter element 23 comprises an inner conical surface 24 having a counter element corrugation. The counter element corrugation of the inner conical surface 24 is stepped as well. However, this corrugation can have a wave-like form as well.

The inner conical surface 24 of the counter element 23 has a second inclination 25 differing from the first inclination 22, i.e. it encloses a second cone angle relative to the center axis 7 which is smaller than the first cone angle of the first valve element 10 and the second valve element 11.

It is possible to provide only one of the two valve elements 10, 11 with a corrugation. Furthermore, it is possible to limit the counter element corrugation to certain parts of the conical inner surface 24.

A ring-like gap 26 forms between the counter element 23 and the first valve element 10 and the second valve element 11, respectively. The flow through the dynamic unit has to pass this gap 26. The corrugations cause a large number of changes in the direction of flow of the fluid passing the gap 26. These changes in the direction of flow have the effect that the velocity of the flow is lowered corresponding to an increase of flow resistance. Although it is preferred that the corrugations are formed as wave-like corrugations or stepwise corrugations, it is also possible to use a corrugation which simply shows an extreme roughness of the surface which roughness should be sufficient to cause a change in the flow direction of the fluid passing through the gap 26 in order to cause turbulences.

The first valve element 10 is loaded by a pressure at the first port 3. When the force generated by this pressure exceeds the force generated by the two springs 17, 18 the first valve element 10 is moved towards the valve seat 5 and the width, i.e. the radial extension, of the gap 26 is decreased. The second valve element 11 is moved as well. However, depending on the relation between the forces of the two springs 17, 18 the second valve element 11 can move differently from the movement of the first valve element 10.

The movement of the first valve element 10 continues until the stop 16 comes to rest against guide 15. No further movement of the first valve element 10 is possible.

However, the pressure between the first valve element 10 and the second valve element 11 still acts on the second valve element 11. If the force generated by this pressure exceeds the force generated by the second spring 18, the second valve element 11 is moved further in direction towards the valve seat 5. Such a movement further increases the flow resistance of the dynamic unit.

The pressure between the first valve element 10 and the second valve element 11 is lower than the pressure at the first port 3. The second valve element 11 can therefore be used for a fine adjustment of the pressure drop.

Counter element 23 comprises an outer thread 27 and housing part 2b comprises an inner thread 28. The outer thread 27 and the inner thread 28 are in engagement, i.e. the counter element 23 is threaded into housing part 2b.

When the counter element 23 is rotated, it changes its position relative to a valve seat member 29 bearing valve seat 5. This in turn changes the initial width of gap 26 and the flow resistance characteristic of the dynamic unit 9.

Rotation of the counter element 23 can be caused by rotation of valve seat member 29. To this end valve seat member 29 comprises a stem 30 protruding into an opening 31 in counter element 23.

Rotation of valve seat member 29 in turn can be caused by rotation of a valve insert 32 which is connected via connecting means 33 to a ring 34 on top of valve 1.

First valve element 10 is guided at both axial ends by means of the first stem 12 and the second stem 13. In this way it is possible to keep the radial extension, i.e. the width of the gap 26 constant in circumferential direction. Since the second valve element 11 is guided and held on the first stem 12, this is also true for the region of the gap 26 between the second valve element 11 and the counter element 23.

A section of gap 26 between first valve element 10 and counter element 23 forms a first bleed and a section of gap 26 between second valve element 11 and counter element 23 forms a second bleed. The first bleed and the second bleed are arranged in series, i.e. the sum of the flow resistance of the first bleed and of the flow resistance of the second bleed is the total flow resistance of the dynamic unit.

Noise is generated when the gap 26 has a rather small width. This problem can be avoided since the series connection of the two bleeds (a bleed can be turned "throttle" as well) makes it possible to keep the width of the gap 26, i.e. the extension in radial direction related to the center axis 7, as large as possible.

## Claims

1. Valve (1), in particular heat exchanger valve, comprising a housing (2) having a first port (3), a second port (4), and a flow path between said first port (3) and said second port (4), wherein a valve seat (5), a main valve element (6), and a dynamic unit (9) are arranged in said flow path, **characterized in that** said dynamic unit (9) comprises at least a first valve element (10) and a second valve element (11), wherein said first valve element (10) is part of a first bleed and said second valve element (11) is part of a second bleed, and said first bleed and said second bleed are arranged in series.

2. Valve according to claim 1, **characterized in that** at least over a part of a movement path said first valve element (10) and said second valve element (11) are movable relative to each other.

3. Valve according to claim 2, **characterized in that** both valve elements (10, 11) have different strokes.

4. Valve according to any of claims 1 to 3, **characterized in that** at least one of said first valve element (10) and said second valve element (11) is in form of a cone section.

5. Valve according to claim 4, **characterized in that** at least one of said first valve element (10) and said second valve element (11) cooperates with an inner conical surface (24) of a counter element (23).

6. Valve according to claim 5, **characterized in that** at least one of said first valve element (10) and said second valve (11) element comprises a valve element corrugation on a circumferential surface (20, 21) and/or said inner conical surface (24) comprises a counter element corrugation.

7. Valve according to claim 6, **characterized in that** in at least one of said valve element corrugation and said counter element corrugation is stepped.

8. Valve according to any of claims 5 to 7, **characterized in that** said valve seat (5) comprises a center axis (7) and a first cone angel of said cone section relative to said center axis (7) differs from a second cone angle of said conical surface (24) relative to said center axis.

9. Valve according to claim 8, **characterized in that** said first cone angle is larger than said second cone angle.

10. Valve according to any of claims 5 to 9, **characterized in that** said counter element (23) comprises a first thread (27) in engagement with a second thread (28) in said housing (2).

11. Valve according to any of claims 1 to 10, **characterized in that** a first spring (17) is arranged between said first valve element (10) and said second valve element (11) and a second spring (18) is arranged between said second valve element (11) and a stop (19) in said housing (2).

12. Valve according to any of claims 1 to 11, **characterized in that** said first valve element comprises a first stem (12) guided in said housing (2), wherein said second valve element (11) is guided on said first stem (12).

13. Valve according to claim 12, **characterized in that** said first valve element comprises a second stem (13) opposite said first stem (12), wherein said second stem (13) is guided in said housing (2).

14. Valve according to claim 13, **characterized in that** said first valve element (10) is provided with a stop.
